(19) Europäisches Patentamt / European Patent Office / Office européen des brevets

(11) **EP 2 667 501 B1**

(12) **EUROPEAN PATENT SPECIFICATION**

(45) Date of publication and mention
of the grant of the patent:
**05.08.2020  Bulletin 2020/32**

(51) Int Cl.:
*H02P 29/032* *(2016.01)*      *H02P 23/26* *(2016.01)*
*H02P 29/50* *(2016.01)*      *H02M 5/458* *(2006.01)*

(21) Application number: **11856054.9**

(86) International application number:
**PCT/JP2011/007364**

(22) Date of filing: **28.12.2011**

(87) International publication number:
**WO 2012/098628 (26.07.2012 Gazette 2012/30)**

(54) **POWER CONVERSION APPARATUS**

STROMRICHTER

CONVERTISSEUR DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.01.2011  JP 2011007775**

(43) Date of publication of application:
**27.11.2013  Bulletin 2013/48**

(73) Proprietor: **Daikin Industries, Ltd.
Osaka-shi, Osaka 530-8323 (JP)**

(72) Inventors:
 • **OGAWA, Takurou
   Kusatsu-shi
   Shiga 525-8526 (JP)**
 • **SEKIMOTO, Morimitsu
   Kusatsu-shi
   Shiga 525-8526 (JP)**

(74) Representative: **Hoffmann Eitle
Patent- und Rechtsanwälte PartmbB
Arabellastraße 30
81925 München (DE)**

(56) References cited:
 EP-A1- 1 871 003      EP-A1- 2 058 937
 WO-A1-95/30942      JP-A- 10 150 777
 JP-A- 2003 164 179      JP-A- 2004 343 993
 JP-A- 2007 028 793      JP-A- 2008 061 409

EP 2 667 501 B1

**Description**

TECHNICAL FIELD

The present disclosure relates to a power conversion apparatus configured to control a motor.

BACKGROUND ART

Conventionally, power conversion apparatuses configured to control, e.g., motors of compressors have been broadly known.

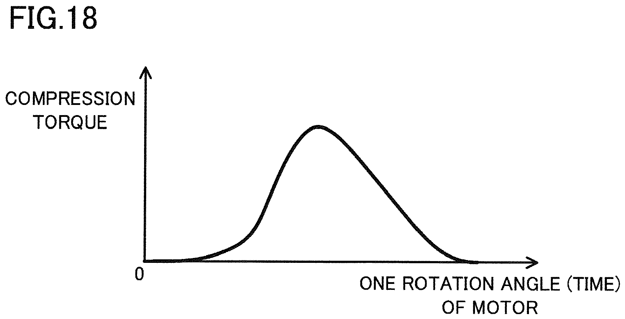

For example, Patent Document 1 discloses a power conversion apparatus configured to vary output torque of a motor depending on pulsation of load torque of a compressor per rotation thereof. That is, referring to, e.g., FIG. 18, in a single cylinder compressor, compression torque varies depending on the rotation angle of a piston per rotation thereof, and therefore the load torque of the motor pulsates in association with the variation in compression torque. Thus, in the power conversion apparatus disclosed in Patent Document 1, the output torque of the motor varies in synchronization with the pulsation of the load torque. This reduces vibration during operation of the compressor.

Patent Document 2 discloses a power conversion apparatus in which the capacitance of a capacitor configured to smooth output voltage is extremely low. Specifically, the power conversion apparatus includes a converter circuit, a DC link connected in parallel with the converter circuit, and an inverter circuit including a plurality of switching devices. In the converter circuit, full-wave rectification of voltage of an AC power supply is performed to output the rectified voltage to the DC link. A capacitor having extremely-low electrostatic capacitance is connected to the DC link. Specifically, such a capacitor only has about one hundredth of capacitance of a typical smoothing capacitor. Thus, the DC link outputs the rectified voltage as DC voltage which pulsates without being smoothed. The inverter circuit converts such DC voltage into AC power, and supplies such power to a motor to drive the motor. In the power conversion apparatus disclosed in Patent Document 2, the capacitor having low capacitance as described above reduces the size of the power conversion apparatus and a cost for the power conversion apparatus.

Moreover, Patent Document 3 discloses that the foregoing torque control is performed for a power conversion apparatus with a capacitor having low capacitance as disclosed in Patent Document 2. That is, if a capacitor connected to a DC link has low electrostatic capacitance, output voltage to the inverter circuit contains a pulsating component. Thus, in Patent Document 3, output torque varies, depending on load torque of a motor, so as to contain a pulsating component of the load torque of the motor and a pulsating component of output voltage of a power supply. In such a manner, vibration of a compressor is reduced.

Also, Patent Document 4 describes a motor controller, a compressor, an air-conditioner, and refrigerator. The motor controller comprises an inverter circuit which drives a brushless motor, and a control unit which controls the phase of the motor current of the brushless motor through the inverter circuit, and thereby controls the rotational speed of the brushless motor.

Also, Patent Document 5 describes a motor drive unit and a motor drive method. In a motor drive, a predicted value of the terminal voltage of the motor and an intermediate DC voltage are compared, when Va>Vdc, a value minimally increased from the set value of a d-axis current in the previous power cycle selected and used at the set value of the d-axis, wherein when Va<Vdc, the set value of the d-axis current that is proportional to the square of the intermediate DC voltage Vdc is selected and used at the set value of the d-axis current. Hereby a q-axis current pattern or a torque pattern becomes proportional to the square of the intermediate DC voltage so that the brake does not operate even when the capacity of the smoothing capacitor is small and the voltage drops substantially.

CITATION LIST

PATENT DOCUMENT

PATENT DOCUMENT 1: Japanese Patent Publication No. 2005-046000
PATENT DOCUMENT 2: Japanese Patent Publication No. 2002-051589
PATENT DOCUMENT 3: Japanese Patent No. 4192979
PATENT DOCUMENT 4: JP 2004 343993 A
PATENT DOCUMENT 5: JP 2003 164179 A

## SUMMARY OF THE INVENTION

### TECHNICAL PROBLEM

In the torque control disclosed in Patent Document 3, a current value for the motor increases with increasing the output torque at timing at which the peak of the pulsating component of the load torque of the motor and the peak of a pulsating component of DC link voltage synchronized with the power-supply voltage are coincident with each other. As a result, breakdown of a switching device and demagnetization of a motor magnet occur in association with the increase in current value for the motor. For example, Patent Document 3 discloses, as countermeasures against the foregoing malfunctions, the control by which the current value for the motor is detected and the output torque is reduced when such a current value exceeds a predetermined upper limit.

However, since the pulsating component of the DC link voltage and the pulsating component of the load torque pulsate with different frequencies, the timings of the peaks of both components are not always coincident with each other. For such a reason, even if current of the motor is detected at timing at which the peaks are offset from each other, a relatively-low current value is obtained, and therefore desired peak current cannot be detected. As a result, the variation range of the output torque of the motor cannot be accurately limited, and therefore the foregoing malfunctions may occur.

The present disclosure has been made in view of the foregoing, and it is an objective of the present disclosure to propose a power conversion apparatus capable of ensuring detection of an increase in motor current during a torque control.

### SOLUTION TO THE PROBLEM

The invention is intended for A power conversion apparatus including a converting section (20) including a plurality of switching devices (Sr, Ss, St, Su, Sv, Sw, Sx, Sy, Sz) and configured to convert, by switching of the switching devices (Sr, Ss, St, Su, Sv, Sw, Sx, Sy, Sz), power from an AC power supply (6) into AC power having a predetermined frequency to output the AC power to a motor (5); and a controller (40) configured to control the switching to allow a torque control such that output torque of the motor (5) to contain a power-supply pulsating component which is a pulsating component with an integer-fold of a frequency of output voltage of the AC power supply (6) and allow the output torque of the motor (5) to vary in association with variation in load torque of the motor (5), and configured to obtain a peak current value of a phase current of the motor when timing of a peak of the power-supply pulsating component and timing of a peak of a load torque pulsating component are coincident or substantially coincident with each other and to reduce a variation range of the output torque such that the peak current value does not exceed a predetermined upper limit.

Note that the output voltage of the AC power supply (6) described herein also means, e.g., output voltage (i.e., output voltage containing a pulsating component synchronized with the AC power supply (6)) of a DC link in the case where the power conversion apparatus includes the DC link.

According to the invention, the controller (40) pulsates the output torque of the motor (5) such that the output torque of the motor (5) contains the pulsating component of the output voltage of the AC power supply (6). Moreover, the controller (40) performs the torque control by which the output torque of the motor (5) varies depending on variation in load torque of the motor (5).

According to the invention, the controller (40) includes a peak holder (55) configured to hold the peak current value in a predetermined determination period, and a torque control amount adjuster (54) configured to reduce the variation range of the output torque of the motor (5) when the peak current value held by the peak holder (55) exceeds the predetermined upper limit.

In the torque control, since the peak holder (55) holds the maximum value for current of the motor (5) as the peak current, it can be ensured that the peak current of the motor (5) is derived. Such a point will be described in detail.

As described above, current of the motor (5) is the highest when the timing of the peak of the load torque of the motor (5) and the timing of the peak of the output voltage of the AC power supply (6) are coincident with each other. However, the cycle of pulsation of the load torque of the motor (5) and the cycle of pulsation of the output voltage of the AC power supply (6) are not always the same. Thus, even if current of the motor (5) is detected at the timing at which the peaks are not coincident with each other, such a current value is relatively small. That is, as long as current of the motor (5) is detected at the timing at which the peaks are coincident with each other, it cannot be ensured that the peak current of the motor (5) generated in the torque control is derived.

For the foregoing reason, in the present disclosure, the peak holder (55) holds the maximum value for current of the motor (5) for each predetermined determination period. Thus, the peak current can be derived at the timing at which the peak of the load torque of the motor (5) and the peak of the output voltage of the power supply are substantially coincident with each other. When the peak current derived as described above exceeds the predetermined upper limit, the torque control amount adjuster (54) performs the control for reducing the variation range of the output torque of the motor (5).

A first preferred embodiment is intended for the power conversion apparatus of the second aspect of the invention, in which the controller (40) further includes a speed reference adjuster (72) configured to adjust an operating frequency (fc) of the motor (5) such that the timing of the peak of the load torque pulsating component and the timing of the peak of the power-supply pulsating component are coincident or substantially coincident with each other during the determination period of the peak holder (55).

In the first preferred embodiment, the speed reference adjuster (72) allows, in the determination period for the peak hold, the timing of the peak of the load torque of the motor (5) and the timing of the peak of output voltage of a DC link (15) to be coincident or substantially coincident with each other. As a result, it can be ensured that the peak current of the motor (5) is derived in the determination period.

A second preferred embodiment is intended for the power conversion apparatus of the second aspect of the invention, in which the controller (40) further includes a cycle deriver (71) configured to derive, based on the frequency of the output voltage of the AC power supply (6) and the operating frequency of the motor (5), a cycle with timing at which a peak of the load torque of the motor (5) and a peak of the output voltage of the AC power supply (6) are coincident or substantially coincident with each other, and the speed reference adjuster (72) adjusts the operating frequency of the motor (5) such that the cycle derived by the cycle deriver (71) is equal to or shorter than the determination period of the peak holder (55).

In the second preferred embodiment, the cycle deriver (71) derives, based on the frequency of the output voltage of the AC power supply (6) and the operating frequency of the motor (5), the cycle in which the timing of the peak of the output voltage of the AC power supply (6) and the timing of the peak of the load torque of the motor (5) are coincident or substantially coincident with each other. The speed reference adjuster (72) adjusts the operating frequency of the motor (5) such that the cycle derived as described above is equal to or less than the determination period of the peak holder (55). As a result, in the determination period, the peak current can be derived in the state in which the timing of the peak of the output voltage of the AC power supply (6) and the timing of the peak of the load torque of the motor (5) are coincident with each other.

A third preferred embodiment is intended for The power conversion apparatus of the first aspect of the invention, in which the controller (40) estimates the peak current value and reduces the variation range of the output torque of the motor (5) such that the estimated peak current value does not exceed the predetermined upper limit.

According to such a configuration, estimation is performed to obtain the peak current value.

A fourth preferred embodiment is intended for the power conversion apparatus of any one of the first to fifth aspects of the invention, which further includes a converter circuit (11) configured to rectify the voltage from the AC power supply (6); a DC link (15) including a capacitor (16) connected in parallel with an output of the converter circuit (11); and an inverter circuit (20) serving as the converting section and configured to convert voltage output from the DC link (15) into AC voltage to output the AC voltage to the motor (5). A capacitance value of the capacitor (16) is set at such a value that voltage input to the inverter circuit (20) has great pulsation to have a maximum value tice or more greater than its minimum value.

In the power conversion apparatus of the fourth preferred embodiment, the capacitor (16) has extremely low electrostatic capacitance, and the voltage input to the inverter circuit (20) has great pulsation.

ADVANTAGES OF THE INVENTION

According to the invention, when the peak current of the motor (5) exceeds the predetermined value, the output torque of the motor (5) is reduced. Thus, damage of the switching devices etc. due to an extremely-high current value for the motor (5) can be avoided in advance.

According to the invention, since the peak hold for holding the current value for the motor (5) in the predetermined determination period is performed, the peak current can be derived at the timing at which the timing of the peak of the load torque and the timing of the peak of the power-supply voltage are coincident or substantially coincident with each other. Thus, it can be ensured that an increase in current value for the motor (5) is detected, and that the switching devices etc. are protected. motor (5) is detected, and that the switching devices etc. are protected.

Particularly in the first and second preferred embodiments, the operating frequency of the motor (5) is adjusted such that the timing of the peak of the load torque and the timing of the peak of the DC link voltage are coincident or substantially coincident with each other in the determination period. The operating frequency is typically determined based on the power-supply frequency. Thus, in, e.g., the case where the frequency of the AC power supply (6) varies with reference to a desired frequency (e.g., 50 Hz or 60 Hz), a beat can be generated with a desired cycle. Moreover, in, e.g., the case where a microcomputer clock varies, a beat can be generated with a desired cycle. As a result, it can be ensured that the peak current is, in the determination period, derived at the timing at which the peak of the load torque and the peak of the DC link voltage are coincident or substantially coincident with each other.

In the third preferred embodiment the peak current can be easily obtained.

In the fourth preferred embodiment in a so-called "capacitorless power conversion apparatus in which a capacitor has extremely low electrostatic capacitance, it can be ensured that an increase in current value for the motor (5) is detected and that the switching devices etc. are protected.

BRIEF DESCRIPTION OF THE DRAWINGS

[FIG. 1] FIG. 1 is a schematic circuit diagram of a power conversion apparatus of an embodiment.

[FIG. 2] FIG. 2 is a block diagram illustrating a controller of the power conversion apparatus in detail.

[FIG. 3] FIG. 3 is a block diagram illustrating a torque controller of the power conversion apparatus in detail.

[FIG. 4] FIG. 4 is a graph illustrating, in a torque control (torque control amount = 100%), a waveform of load torque of a motor, a waveform of DC link voltage, and a waveform of output torque of the motor.

[FIG. 5] FIG. 5 is a graph illustrating, in the torque control (torque control amount = 150%), a waveform of the load torque of the motor, a waveform of the DC link voltage, and a waveform of the output torque of the motor in the state in which negative torque is not limited by a limiter.

[FIG. 6] FIG. 6 is a graph illustrating, in the torque control (torque control amount = 150%), a waveform of the load torque of the motor, a waveform of the DC link voltage, and a waveform of the output torque of the motor in the state in which the negative torque is limited by a limiter.

[FIG. 7] FIG. 7 a graph illustrating, in a torque control, a waveform of the load torque of the motor, a waveform of the DC link voltage, and a waveform of the output torque of the motor in the state in which the peak of the load torque and the peak of the DC link voltage are coincident with each other.

[FIG. 8] FIG. 8 is a graph illustrating a peak hold operation in the torque control.

[FIG. 9] FIG. 9 is a graph illustrating the state in which the peak of the load torque of the motor and the peak of the DC link voltage are gradually offset from each other.

[FIG. 10] FIG. 10 is a block diagram of a speed reference controller.

[FIG. 11] FIG. 11 is a graph illustrating a cycle of beat occurrence and a determination period for the peak hold operation in the state in which a beat is not generated every determination period.

[FIG. 12] FIG. 12 is a flowchart illustrating a control performed by the speed reference controller.

[FIG. 13] FIG. 13 is a graph illustrating the cycle of beat occurrence and the determination period for the peak hold operation in the state in which a beat is generated every determination period.

[FIG. 14] FIG. 14 is a graph illustrating, as an example, an increase in DC link voltage in association with resonance between a reactor and a capacitor.

[FIG. 15] FIG. 15 is a schematic circuit diagram of a power conversion apparatus of a first variation.

[FIG. 16] FIG. 16 is a circuit diagram of a power conversion apparatus of a second variation.

[FIG. 17] FIG. 17 is a circuit diagram of a power conversion apparatus of a third variation.

[FIG. 18] FIG. 18 is a graph illustrating an example of variation in compression torque.

[FIG. 19] FIG. 19 is a block diagram illustrating a configuration of a controller of an example not forming part of the invention.

DESCRIPTION OF EMBODIMENTS

Embodiments of the present disclosure will be described in detail below with reference to drawings. Note that the embodiments described below will be set forth merely for the purpose of preferred examples in nature, and are not intended to limit the scope, applications, and use of the invention.

<<First Embodiment of the Invention>>

A power conversion apparatus (10) of the present disclosure is connected to, e.g., a three-phase AC motor (5) of a compressor connected to a refrigerant circuit of an air conditioning apparatus. The compressor is, e.g., a rotary compressor including a single cylinder. That is, in such a compressor, compression torque (i.e., load torque of the motor (5)) pulsates during one rotation of a drive shaft. The motor (5) is, e.g., a 4-pole 6-slot concentrated winding type DC brushless motor. As will be described later, the power conversion apparatus (10) is configured so as to perform a torque control for controlling torque generated in the motor (5) to reduce vibration of the motor (5).

<Entire Configuration of Power Conversion Apparatus>

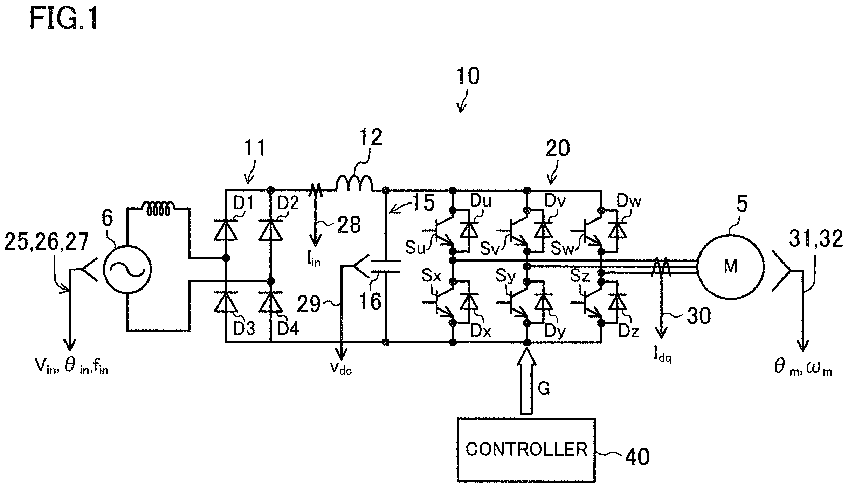

Referring to FIG. 1, the power conversion apparatus (10) includes a converter circuit (11), a DC link (15), an inverter circuit (20), and a controller (40). The power conversion apparatus (10) converts AC power supplied from a single-phase AC power supply (6) into power having a predetermined frequency, and then supplies such power to the motor (5).

The converter circuit (11) is connected to the AC power supply (6). The converter circuit (11) is a so-called "diode bridge circuit" in which a plurality of diodes (D1-D4) (four diodes in the present embodiment) are connected together in a bridge configuration. The converter circuit (11) is a full-wave rectification circuit configured to perform full-wave rectification of AC output from the AC power supply (6) into DC.

The DC link (15) is connected in parallel with an output side of the converter circuit (11). A reactor (12) is connected between the converter circuit (11) and the DC link (15). The DC link (15) includes a capacitor (16). DC voltage (DC link voltage Vdc) generated at both ends of the capacitor (16) is applied to input nodes of the inverter circuit (20).

The capacitor (16) is, e.g., a film capacitor. The capacitor (16) is set so as to have relatively-low electrostatic capacitance (e.g., tens of $\mu$F). Specifically, the capacitor (16) has such electrostatic capacitance that, when switching devices (Su, Sv, Sw, Sx, Sy, Sz) of the inverter circuit (20) are operated, ripple voltage (voltage variation) generated in association with operation of the switching devices (Su, Sv, Sw, Sx, Sy, Sz) can be smoothed. Moreover, the capacitor (16) has such electrostatic capacitance that voltage (voltage variation due to power-supply voltage) rectified by the converter circuit (11) cannot be smoothed. Thus, the DC link (15) receives output of the converter circuit (11), and the DC link voltage Vdc pulsating with a frequency twice as high as power-supply voltage Vin of the AC power supply (6) is output through the both ends of the capacitor (16). The DC link voltage Vdc output from the DC link (15) has such great pulsation that the maximum value therefor is equal to or greater than double the minimum value therefor.

The inverter circuit (20) serves as a converting section. The input node of the inverter circuit (20) is connected in parallel with the capacitor (16) of the DC link (15). The inverter circuit (20) coverts output of the DC link (15) into three-phase AC by switching, and supplies such AC to the motor (5) connected thereto. The inverter circuit (20) of the present embodiment is formed in such a manner that the plurality of switching devices are connected together in a bridge configuration. Since the inverter circuit (20) outputs three-phase AC to the motor (5), the inverter circuit (20) includes the six switching devices (Su, Sv, Sw, Sx, Sy, Sz). Specifically, the inverter circuit (20) includes three switching legs in each of which two of the switching devices are connected together in series. Each of the switching legs is connected to a phase coil (not shown in the figure) of the motor (5) at a middle point between the upper-arm switching device (Su, Sv, Sw) and the lower-arm switching device (Sx, Sy, Sz). Each of free wheeling diodes (Du, Dv, Dw, Dx, Dy, Dz) are connected in inverse-parallel with a corresponding one of the switching devices (Su, Sv, Sw, Sx, Sy, Sz). The inverter circuit (20) switches the switching devices (Su, Sv, Sw, Sx, Sy, Sz) between ON and OFF to convert the DC link voltage (Vdc) input from the DC link (15) into three-phase AC voltage, and then supplies such voltage to the motor (5).

The power conversion apparatus (10) includes various detectors. Specifically, the power conversion apparatus (10) includes a power-supply voltage detector (25) configured to detect the power-supply voltage (Vin) of the AC power supply (6), a power-supply phase detector (26) configured to detect the power-supply phase ($\theta$in) of the power-supply voltage of the AC power supply (6), and a power-supply frequency detector (27) configured to detect the frequency (fin) of the power-supply voltage of the AC power supply (6). Moreover, the power conversion apparatus (10) further includes an input current detector (28) configured to detect input current (Iin) of the converter circuit (11), and a DC link voltage detector (29) configured to detect the DC link voltage (Vdc) of the DC link (15). Furthermore, the power conversion apparatus (10) still further includes a motor current detector (30) configured to detect current (Idq) flowing through the motor (5) (specifically, current flowing through each phase of the motor (5)), a motor phase detector (31) configured to detect the phase ($\theta$m) of the motor (5), and a motor rotational speed detector (32) configured to detect the actual rotational speed ($\omega$m) of the motor (5).

The controller (40) outputs a gate signal (G) for controlling switching (ON/OFF) of the inverter circuit (20) to the inverter circuit (20). The controller (40) of the present embodiment is configured so as to perform the torque control by which a pulsating component of the power-supply voltage is synthesized with output torque of the motor (5) and the output torque of the motor (5) varies depending on variation in load torque of the motor (5).

<Detailed Configuration of Contoller>

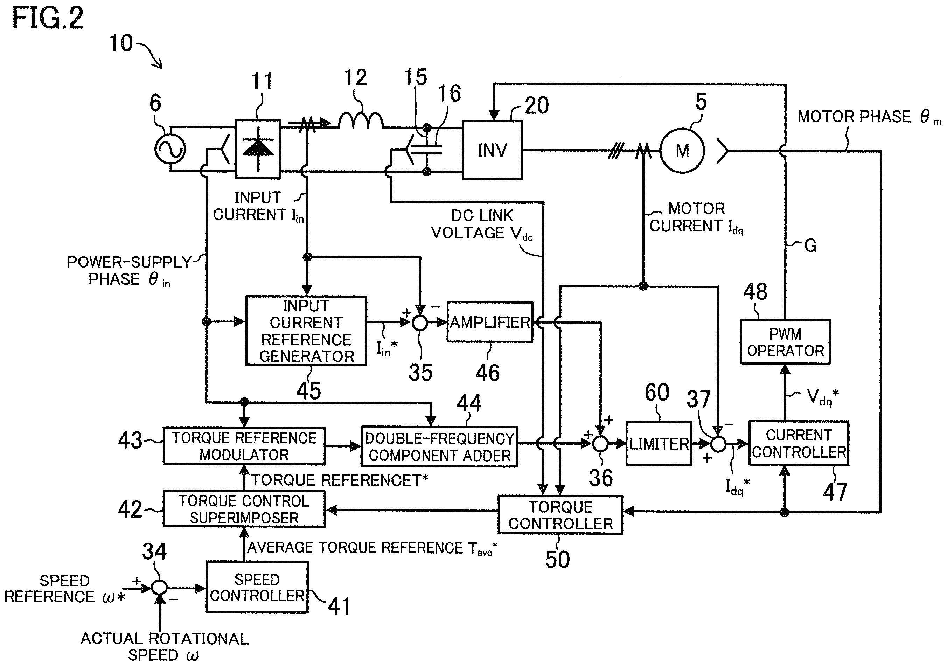

Referring to FIG. 2, the controller (40) includes a speed controller (41), a torque controller (50), a torque control superimposer (42), a torque reference modulator (43), a double-frequency component adder (44), an input current reference generator (45), an amplifier (46), a limiter (60), a current controller (47), and a PWM operator (48).

In a subtractor (34), a deviation is obtained by subtracting an actual rotational speed ($\omega$m) of the motor (5) from a speed reference ($\omega$*) of the motor rotational speed. Then, such a deviation is input to the speed controller (41). The speed controller (41) performs proportional-integral calculation (IP calculation) of the deviation between the actual rotational speed ($\omega$m) and the speed reference ($\omega$*), thereby calculating an average (average torque) of the load torque of the motor (5). The average torque is an average of the load torque pulsating with a predetermined cycle. The speed controller (41) outputs, as a reference value (average torque reference value (Tave*)), the average torque to the torque control superimposer (42).

In the torque control superimposer (42), the average torque reference value (Tave*) is multiplied by a reference value output from the torque controller (50) which will be described in detail later. In such a manner, in the torque control superimposer (42), a torque reference value (T*) synthesized with a pulsating component of the load torque of the motor (5) is generated. The reference value generated in the torque control superimposer (42) is input to the torque reference modulator (43).

The torque reference modulator (43) generates a sine value $\sin\theta in$ from the phase angle (power-supply phase ($\theta in$)) of the AC power supply (6) input thereto. Then, the torque reference modulator (43) multiplies the torque reference value (T*) by a modulation coefficient r corresponding to the sine value $\sin\theta in$, and then outputs the obtained value to the double-frequency component adder (44). The double-frequency component adder (44) adds a frequency component twice as high as the power-supply frequency to the output value of the torque reference modulator (43) such that output power of the motor (5) forms a sinusoidal pattern. The modulation coefficient r is, e.g., $|\sin(\theta in)|$ or $\sin^2(\theta in)$. Note that the modulation coefficient r may vary depending on the power-supply frequency (50 Hz or 60 Hz) in order to approximate the output power of the motor (5) to the sinusoidal wave. Alternatively, the modulation coefficient r may be determined depending on a sine value $\sin(\theta in + \Delta)$ obtained by shifting the phase ($\theta in$) by a predetermined amount $\Delta$ such that the output power of the motor (5) forms the sinusoidal pattern. This realizes advantages substantially similar to those in the case where the frequency component twice as high as the power-supply frequency is added.

Meanwhile, the input current reference generator (45) performs Fourier transform of input current (Iin) to extract a fundamental frequency component, and multiplies the fundamental frequency component by $\sin(\theta in)$ to generate a reference value (Iin*) for the input current. After an absolute value ($|Iin|$) for the input current is subtracted from the reference value (Iin*) in a subtractor (35), the obtained value is output to the amplifier (46). In the amplifier (46), the output value obtained by subtraction is multiplied by a predetermined gain.

The output value from the double-frequency component adder (44) and the output value from the amplifier (46) are added together in an adder (36). After the reference value obtained by addition is processed in the limiter (60) which will be described in detail later, the obtained value is input to a subtractor (37). In the subtractor (37), an actual motor current (Idq) is subtracted from the reference value output from the limiter (60), and the obtained value is output to the current controller (47). The current controller (47) generates a voltage reference value (Vdq*) based on the current reference value, and outputs the voltage reference value (Vdq*) to the PWM operator (48).

The PWM operator (48) generates, based on the voltage reference value (Vdq*), a gate signal (G) for controlling ON/OFF of the switching devices (Su, Sv, Sw, Sx, Sy, Sz). This allows ON/OFF of the switching devices (Su, Sv, Sw, Sx, Sy, Sz) at a predetermined duty ratio.

<Basic Configuration of Torque Controller>

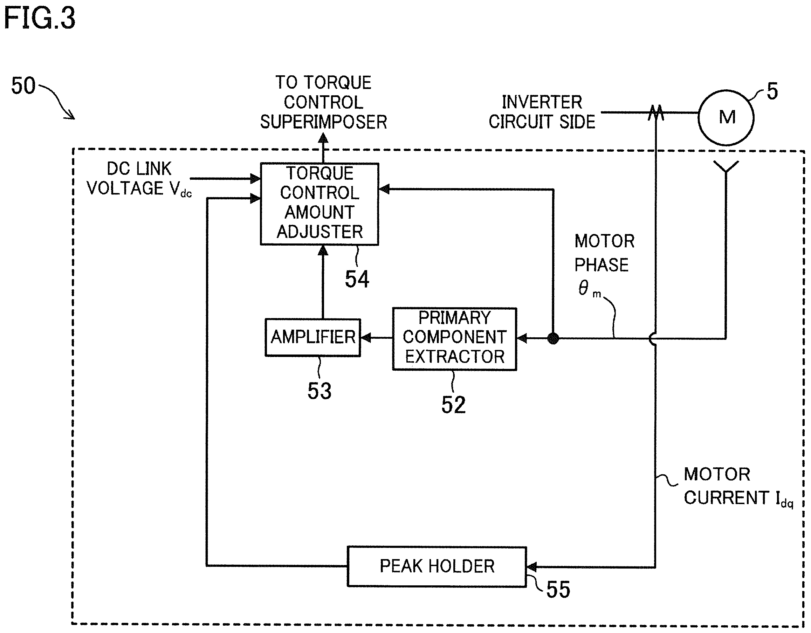

The torque controller (50) is configured to determine/output, based on, e.g., the load torque of the motor (5), a control amount for the foregoing torque reference. Referring to FIG. 3, the torque controller (50) includes a primary component extractor (52), an amplifier (53), a torque control amount adjuster (54), and a peak holder (55).

The primary component extractor (52) performs Fourier transform to extract, from the pulsating component of the load torque of the motor (5), a primary component (fundamental frequency component) to which vibration of the motor (5) is most susceptible. The amplifier (53) multiplies the primary component extracted by the primary component extractor (52) by a predetermined gain, and outputs the obtained value to the torque control amount adjuster (54).

The torque control amount adjuster (54) outputs, as a final torque control amount, the reference value to be multiplied by the average torque reference value (Tave*) to the torque control superimposer (42). Thus, the torque control superimposer (42) outputs the torque reference value (T*) having a variation range larger than that of the average torque reference value (Tave*). In the case where the variation range of the torque reference value (T*) obtained by multiplication is equal to that of the average torque reference value (Tave*), the variation range of the output torque of the motor (5) corresponds to the average value (average torque) of the load torque. In such a case, the ratio of the variation range of the output torque to the variation range of the average torque, i.e., the torque control amount, is 100%. In the present embodiment, the primary component which is a main component of vibration of the motor (5) is greater than the average torque. Thus, if the torque control is performed so as to sufficiently reduce vibration, the torque control amount is generally equal to or greater than 100%. That is, according to the present embodiment, in the torque control, the output torque of the motor (5) is adjusted so as to have a waveform with a variation range greater than the average value of the load torque of the motor (5).

The peak holder (55) illustrated in FIG. 3 serves as a peak current deriver configured to hold, for a predetermined determination period, the maximum value for the current (Idq) flowing through the motor (5) and derive peak current. When the peak current exceeds a predetermined upper limit, the torque control amount adjuster (54) adjusts the output reference value such that the torque control amount is reduced. Moreover, the torque control amount adjuster (54) controls the output reference value for the torque control amount based on the DC link voltage (Vdc) detected by the DC link voltage detector (29).

<Basic Operation of Torque Control>

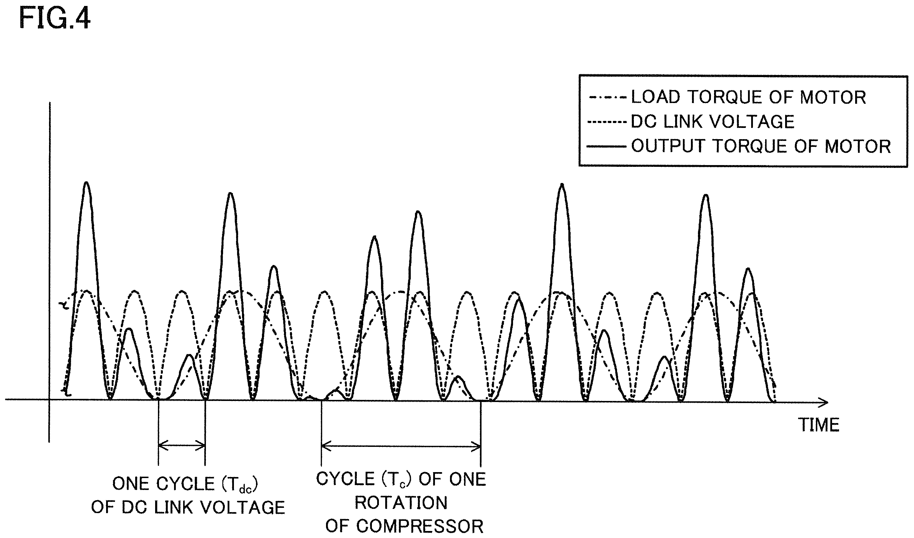

The torque control will be more specifically described. The input reference value of the current controller (47) is synthesized with a torque reference value for generating output torque reducing the load torque of the motor (5). Thus, in the torque control, the output torque of the motor (5) is controlled as illustrated in, e.g., FIG. 4. Note that FIG. 4 illustrates a chronological change in the load torque of the motor (5), the DC link voltage (Vdc) output from the DC link (15), and the output torque of the motor (5) under conditions where the frequency fin of the AC power supply (6) = 50 Hz, the rotational speed of the motor (5) = 30 rps, and the torque control amount = 100%.

In the power conversion apparatus (10) of the present embodiment, the DC link voltage (Vdc) pulsates with a cycle (Tdc), and the load torque of the motor (5) also pulsates with a cycle (Tc). Thus, the output torque is controlled such that the pulsation of the power-supply voltage of the AC power supply (6) and the pulsation of the load torque are synthesized with each other. As a result, the output torque is relatively large at, e.g., timing at which the peak of the DC link voltage (Vdc) and the peak of the load torque are relatively close to each other. Since the output torque of the motor (5) is controlled so as to be synchronized with the load torque, variation in speed of the motor (5) is reduced, and therefore vibration of the motor (5) is reduced. Particularly in the present embodiment, since the output torque of the motor (5) is controlled such that the fundamental frequency component of the load torque which is a main factor for vibration is reduced, vibration of the motor (5) can be effectively reduced.

<Limiter>

In the foregoing torque control, the torque control amount is equal to or greater than 100% in order to reduce the primary component for vibration of the motor (5). For such a reason, in the torque control, it is likely that the variation range (amplitude) of the output torque of the motor (5) increases. Thus, when the amplitude of the output torque increases as described above and the output torque reaches a negative value, there is a possibility that regeneration of the motor (5) occurs.

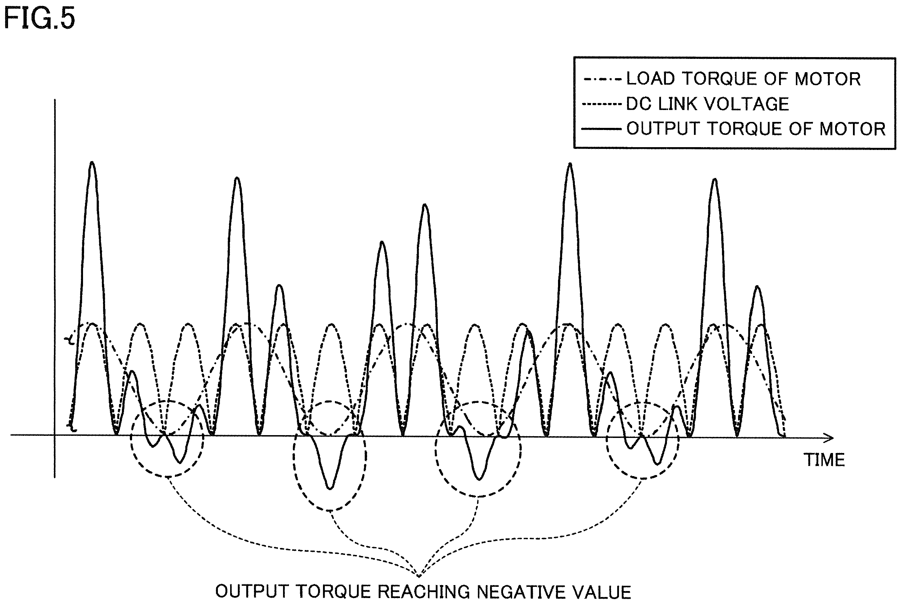

Specifically, e.g., the example shown in FIG. 5 illustrates a chronological change in the load torque of the motor (5), the DC link voltage (Vdc) output from the DC link (15), and the output torque of the motor (5) under conditions where the frequency fin of the AC power supply (6) = 50 Hz, the rotational speed of the motor (5) = 30 rps, and the torque control amount = 150%. In such an example, the variation range of the output torque increases due to an increase in torque control amount. In association with such an increase, the output torque falls below zero, and varies to a negative value. As a result, regeneration of the motor (5) occurs in ranges each surrounded by a dashed line in FIG. 5.

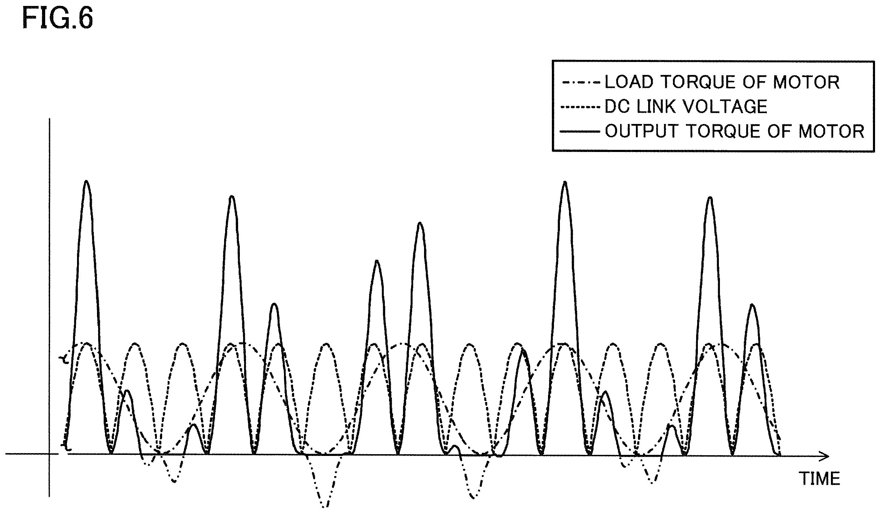

On the other hand, in the power conversion apparatus (10) of the present embodiment, the electrostatic capacitance of the capacitor (16) of the DC link (15) is set at an extremely-small value. Thus, when regeneration of the motor (5) occurs as described above, there is a possibility that overvoltage of the DC link (15) occurs due to insufficient absorption of regeneration energy by the capacitor (16), and therefore, e.g., the switching devices (Su, Sv, Sw, Sx, Sy, Sz) are damaged. For such a reason, in the present embodiment, the limiter (60) is, referring to FIG. 2, provided in the controller (40) to limit the output torque from reaching a negative value. That is, the limiter (60) generates, for a reference value input thereto, a reference value for limiting negative output torque such that the output torque of the motor (5) does not reach a negative value. Thus, the output torque (output torque indicated by a chain double-dashed line in FIG. 6) varying to a negative value in the prior art is, referring to, e.g., FIG. 6, maintained at a value higher than the negative value (e.g., the output torque = 0). As a result, it is ensured that regeneration of the motor (5) is reduced or prevented, and, e.g., the switching devices (Su, Sv, Sw, Sx, Sy, Sz) are protected. In the control performed by the limiter (60), no limitation is placed on positive output torque. Thus, in the torque control, sufficient output torque of the motor (5) can be obtained, and vibration of the motor (5) can be effectively reduced.

In the present embodiment, since the limiter (60) is provided right before an input side of the current controller (47), it is ensured that the output torque is prevented from reaching a negative value. However, the limiter (60) may be provided at other part on the input side of the current controller (47). Specifically, the limiter (60) may be provided on an output side of the torque control amount adjuster (54) of the torque controller (50).

<Reduction in Motor Current upon Torque Control>

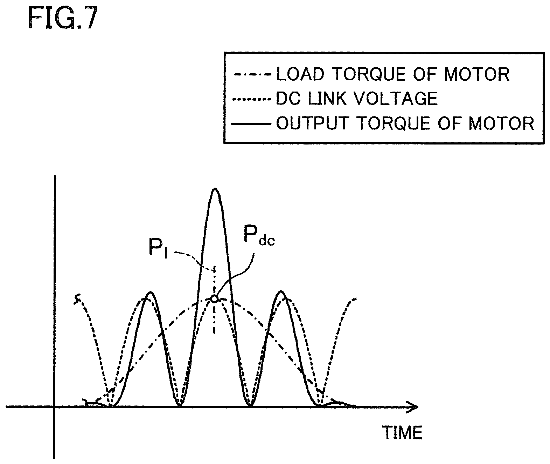

In the foregoing torque control, the current (Idq) of the motor (5) increases due to an increase in output torque of the motor (5). Specifically, referring to, e.g., FIG. 7, when timing of the peak (peak (pl) indicated by a chain double-dashed line in FIG. 7) of the load torque of the motor (5) and timing of the peak (peak (Pdc) indicated by a white circle in FIG. 7) of the DC link voltage (Vdc) are coincident or substantially coincident with each other, the output torque of the motor (5) is extremely high. Thus, when the timings of the peaks (Pl, Pdc) are coincident with each other, current of the motor (5) sharply increases. When current of the motor (5) sharply increases as described above, a current value for the switching device (Su, Sv, Sw, Sx, Sy, Sz) exceeds the maximum allowable rated current value, resulting in damage of the switching device (Su, Sv, Sw, Sx, Sy, Sz) or demagnetization of a magnet of the motor (5). Moreover, if a device current capacity is increased as countermeasures against the foregoing malfunction, a cost for the power conversion apparatus (10) is increased.

It is considered as the countermeasures against the foregoing malfunction that a current value for the motor (5) is arbitrarily detected and the torque control amount of the torque control amount adjuster (54) is controlled such that the current value does not exceed a predetermined upper limit. However, in the present embodiment, since the DC link voltage (Vdc) pulsates with the predetermined frequency as described above, the timing of the peak (Pdc) of the DC link voltage (Vdc) and the timing of the peak (Pl) of the load torque are not always coincident with each other (see, e.g., FIG. 4). Thus, even if current of the motor (5) is detected at the timing at which the peaks (Pdc, Pl) are offset from each other, a value for such current of the motor (5) is relatively low, and desired peak current cannot be detected.

For the foregoing reason, in the controller (40) of the present embodiment, the peak holder (55) is provided so that detection of peak current of the motor (5) can be ensured.

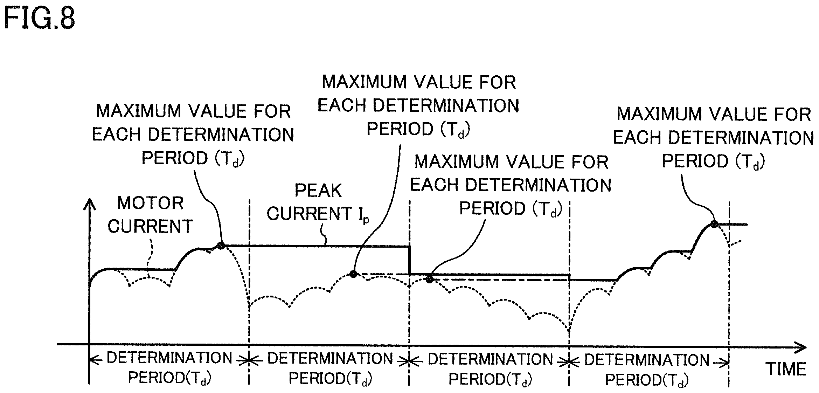

The peak holder (55) is configured to hold, for each predetermined determination period (Td) set in advance, the maximum value for motor current detected by the motor current detector (30) (in a strict sense, a peak value for phase current of the motor (5) in each control cycle). Such a point will be described in detail with reference to FIG. 8.

Motor current is arbitrarily input to the peak holder (55). The peak holder (55) derives the maximum value for motor current (i.e., peak current (Ip)) every predetermined determination period (Td). In the present embodiment, the peak current (Ip) derived in a certain determination period is also held at the subsequent determination period (Td). Since the peak current (Ip) is held at the predetermined determination period (Td), it is easier to detect current of the motor (5) at the timing at which the timing of the peak (Pl) of the load torque and the timing of the peak (Pdc) of the DC link voltage (Vdc) are coincident with each other. Note that the determination period (Td) is set at such a time (e.g., 1 second) that the timing at which the peaks (Pl, Pdc) are coincident with each other can be successfully detected.

Referring to FIG. 8, if detected motor current is higher than the peak current (Ip) of a previous determination period (Td) in a certain determination period (Td), the peak current (Ip) is renewed. That is, in a certain determination period (Td), the peak current (Ip) is renewed such that the maximum value for motor current is arbitrarily traced. Thus, even in the case where the average torque sharply increases in the determination period (Td), the current peak can be promptly detected.

The peak current (Ip) detected by the peak holder (55) is output to the torque control amount adjuster (54). The torque control amount adjuster (54) controls, when the peak current (Ip) exceeds a predetermined upper limit, the torque control amount to reduce the output torque of the motor (5). As a result, motor current is prevented from being excessive in the torque control, and therefore the foregoing malfunction can be avoided in advance. Note that the upper limit for peak current (Ip) is set at a predetermined value lower than, e.g., the maximum allowable rated current value for the switching device (Su, Sv, Sw, Sx, Sy, Sz).

<Speed Reference Adjustment in Torque Control>

As described above, even if the peak holder (55) holds, for each determination period (Td), the peak current (Ip) for motor current, and the determination period (Td) is extremely long, controllability of the torque control amount may be degraded. Specifically, suppose that the peak current (Ip) is held within the determination period (Td), and then the average torque decreases during such a determination period (Td). Although the torque control amount can be slightly increased in actuality, the torque control amount is limited as described above. Thus, a torque control performance is lowered.

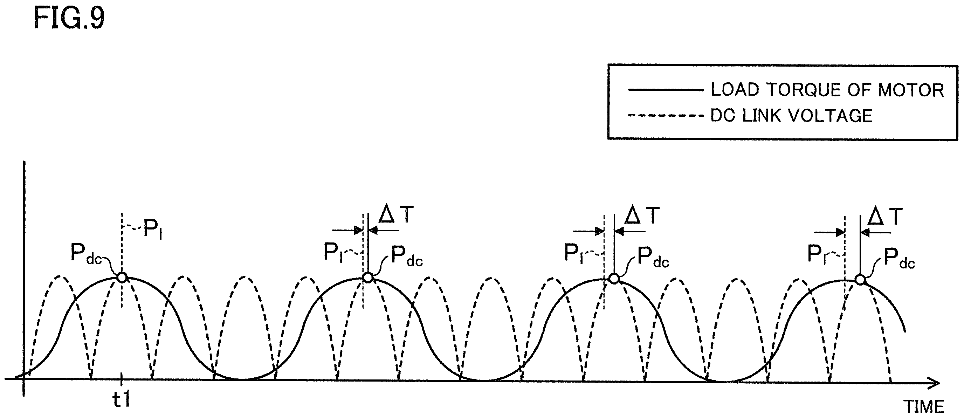

Such a point will be described in detail with reference to FIG. 9. FIG. 9 illustrates an example of a waveform of the DC link voltage (Vdc) and a waveform of the load torque of the motor (5). In this example, the timing of the peak (Pdc) of the DC link voltage (Vdc) and the timing of the peal (Pl) of the load torque of the motor (5) are coincident with each other at point tl. Moreover, in this example, the frequency (fdc) of the DC link voltage and n-fold, where n represents an integer, of the frequency (i.e., the operating frequency fc of the motor (5)) of the load torque are slightly offset from each other. Thus, in FIG. 9, after the peaks (Pl, Pdc) are coincident with each other, the peak (Pdc) of the DC link voltage (Vdc) and the peak (Pl) of the load torque are gradually shifted from each other, and the offset (ΔT illustrated in FIG. 9) between the peaks gradually increases. Under such conditions, it is less likely that the timings of the peaks are coincident with each other, and therefore the peak current (Ip) cannot be accurately detected for a long period of time. Conversely, if a long determination period (Td) is set in order to ensure detection of the peak current (Ip) under the foregoing conditions, the torque control performance is lowered as described above.

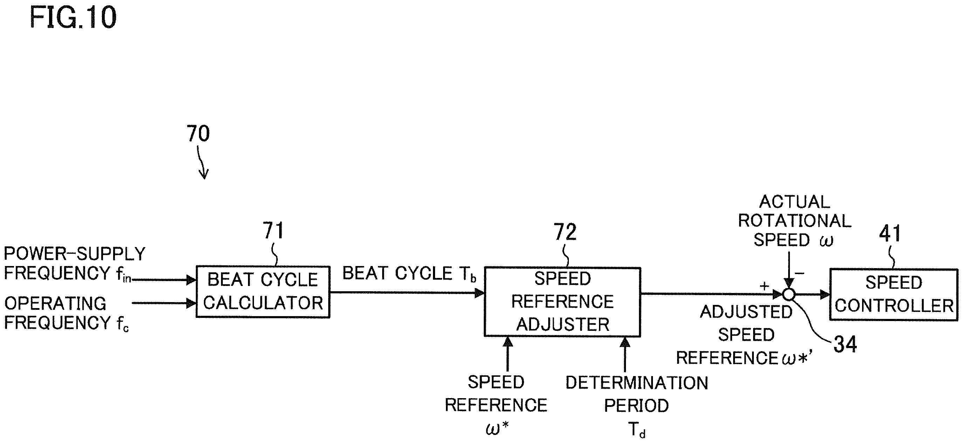

For the foregoing reasons, in the controller (40) of the present embodiment, a speed reference controller (70) configured to ensure detection of the peak current (Ip) under the foregoing conditions is provided (see FIG. 10). The speed reference controller (70) includes a beat cycle calculator (71) and a speed reference adjuster (72). The beat cycle calculator (71) serves as a cycle deriver configured to derive, in the torque control, the cycle (hereinafter referred to as a beat cycle (Tb)) of the timing at which the timing of the peak (Pdc) of the DC link voltage (Vdc) and the timing of the peak (Pl) of the load torque are coincident or substantially coincident with each other. The speed reference adjuster (72) is configured to adjust the speed reference ($\omega$*) of the motor (5) based on the beat cycle (Tb) derived by the beat cycle calculator (71) to adjust the operating frequency (fc) of the motor (5).

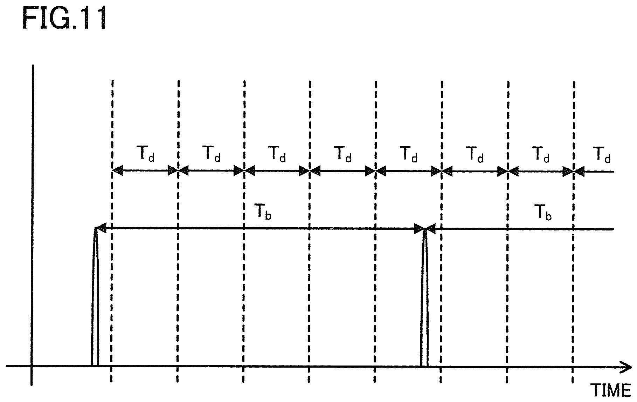

Specifically, in, e.g., the torque control, suppose that the peak (Pdc) of the DC link voltage (Vdc) and the peak (Pl) of the load torque are not coincident with each other in a certain determination period (Td) as schematically illustrated in FIG. 11, and the beat cycle (Tb) is much longer than the determination period (Td) of the peak holder (55). Under such conditions, even if the foregoing peak hold is performed, detection of the peak current (Ip) cannot be ensured.

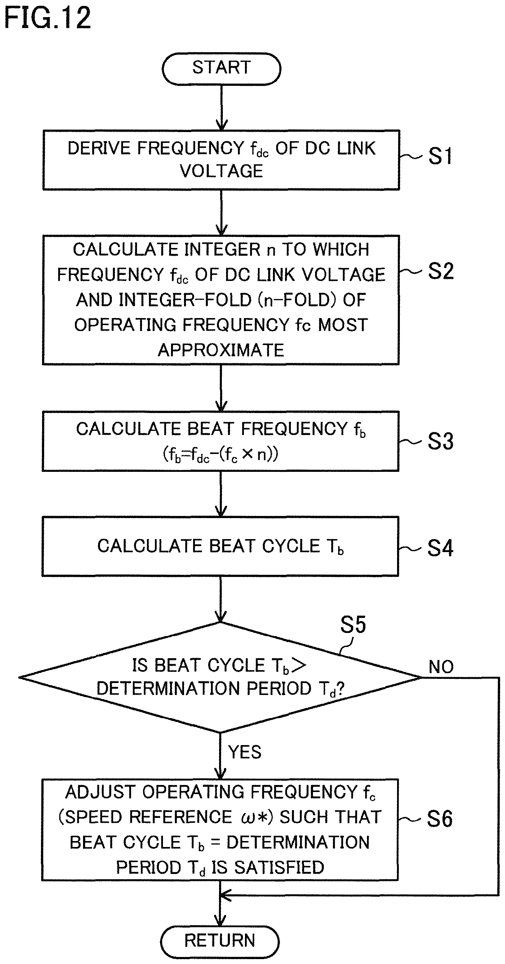

Thus, the speed reference controller (70) performs a control illustrated in FIG. 12. At step S1, the beat cycle calculator (71) derives the frequency (fdc) of the pulsation of the DC link voltage (Vdc). The frequency (fdc) of the pulsation of the DC link voltage (Vdc) is calculated, e.g., in such a manner that the frequency (fin) of the pulsation of voltage of the AC power supply (6) detected by the power-supply frequency detector (27) is doubled (fdc = fin $\times$ 2).

Then, at step S2, the beat cycle calculator (71) calculates an integer n to which the frequency (fdc) of the pulsation of the DC link voltage (Vdc) and the integer-fold (n-fold) of the operating frequency (fc) of the motor (5) most approximate. Suppose that the frequency (fin) of voltage of the AC power supply (6) is 50.1 Hz, the frequency (fdc) of the pulsation of the DC link voltage (Vdc) is 100.2 Hz, and the operating frequency (fc) is 25 Hz. The integer n is 4.

Subsequently, at step S3, the beat cycle calculator (71) calculates, according to the following equation (1), the frequency (beat frequency (fb)) with which a beat is generated:

$$ fb = fdc - (fc \times n) \qquad \text{Equation (1)} $$

Then, at step S4, the beat cycle calculator (71) obtains an inverse of the calculated beat frequency (fb) to calculate the beat cycle (Tb). Suppose that the calculated frequency (fdc) of the DC link voltage is 100.2 Hz, the operating frequency (fc) of the motor (5) is 25 Hz, and the integer n is 4. According to the equation (1), the beat frequency (fb) is 100.2 Hz - 25 Hz $\times$ 4 = 0.2 Hz. Thus, the beat cycle (Tb) is 5 seconds.

At step S5, the speed reference adjuster (72) compares between the calculated beat cycle (Tb) and the determination period (Td) set at the peak holder (55). Suppose that the beat cycle (Tb) is 5 seconds, the determination period (Td) is 1 second, and the beat cycle (Tb) is longer than the determination period (Td). It cannot be ensured that motor current at the point at which the peak (Pdc) of the DC link voltage (Vdc) and the peak (Pl) of the load torque are coincident with each other cannot be detected for each determination period (Td) as the peak current (Ip). Thus, at step S5, if Tb > Td, the process proceeds to step S6, and the speed reference ($\omega$*) is adjusted such that the operating frequency (fc) of the motor (5) is adjusted.

Specifically, at step S6, the speed reference adjuster (72) calculates, according to the following equation (2), an operating frequency (fc*) for equalizing the beat cycle (Tb) to the determination period (Td):

$$ fc* = (fdc - (1 / Td)) / n \qquad \text{Equation (2)} $$

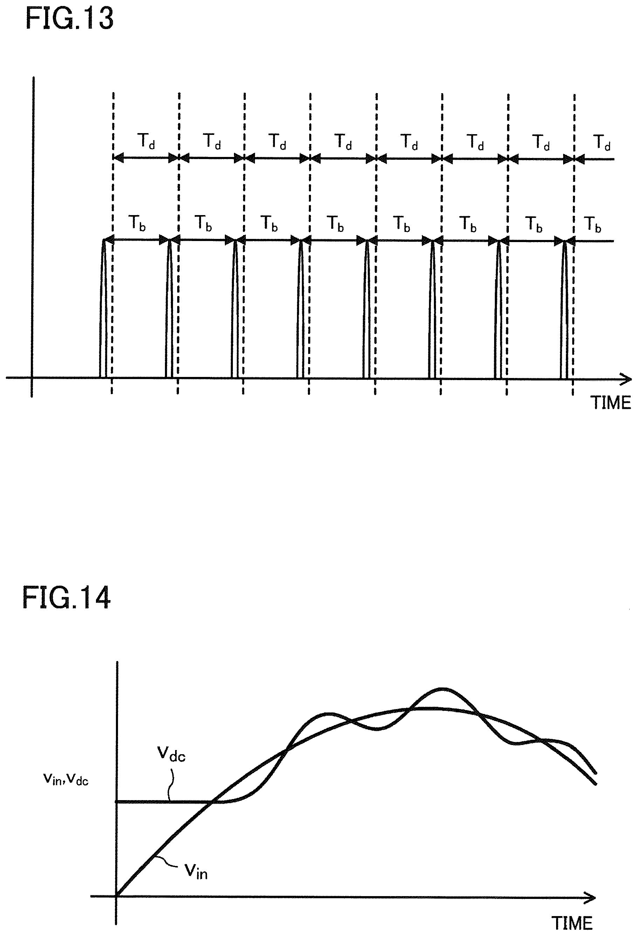

Suppose that the frequency (fdc) of the pulsation of the DC link voltage (Vdc) is 100.2 Hz, the determination period (Td) is 1 second, and the integer n is 4. According to the equation (2), the operating frequency (fc*) for equalizing the beat cycle (Tb) to the determination period (Td) is (100.2 Hz - 1.0 Hz) / 4 = 24.8 Hz. The speed reference adjuster (72) adjusts the input speed reference ($\omega$*) such that the current operating frequency (e.g., an operating frequency fc of 25 Hz) is adjusted to the calculated operating frequency (e.g., an operating frequency fc* of 24.8 Hz). This equalizes between the beat cycle (Tb) and the determination period (Td) in the subsequent operation. Thus, referring to, e.g., FIG. 13, the peak current (Ip) can be, during each determination period (Td), derived in the state in which the timing of the peak (Pdc) of the DC link voltage (Vdc) and the timing of the peak (Pl) of the load torque are coincident or substantially coincident with each other at least once.

If the beat cycle (Tb) is longer than the determination period (Td), the speed reference adjuster (72) of the present embodiment adjusts the operating frequency (fc) of the motor (5) such that the beat cycle (Tb) and the determination period (Td) are equal to each other. However, if the beat cycle (Tb) is longer than the determination period (Td), the speed reference adjuster (72) may adjust the operating frequency (fc) such that the beat cycle (Tb) is shorter than the determination period (Td). That is, during the determination period (Td), the timing of the peak (Pdc) of the DC link voltage (Vdc) and the timing of the peak (Pl) of the load torque are coincident or substantially coincident with each other at least once.

<Adjustment of Torque Control Amount based on DC Link Voltage>

If the output torque becomes, in the torque control, excessive under conditions where the power-supply voltage (Vin) of the AC power supply (6) is relatively high or relatively low, there is a possibility that a malfunction(s) occurs. Specifically, in the case where the torque control amount is relatively large under conditions where the power-supply voltage (Vin) is relatively high and therefore the DC link voltage (Vdc) is also relatively high, resonance between the reactor (12) and the capacitor (16) may increase, resulting in the extremely-high DC link voltage (Vdc) (see, e.g., FIG. 14). Moreover, in the case where the torque control amount is relatively large under conditions where the power-supply voltage (Vin) is relatively low and therefore the DC link voltage (Vdc) is also relatively low, the duty ratio of a pulse signal of the PWM operator (48) increases in order to obtain predetermined output torque. As a result, there is a possibility that torque controllability is degraded due to delayed response in a current control.

For the foregoing reasons, in the present embodiment, the torque control amount adjuster (54) adjusts the torque control amount based on the peak of the DC link voltage (Vdc) in a half power-supply cycle. Specifically, e.g., if the peak of the DC link voltage (Vdc) in the half power-supply cycle exceeds a predetermined upper limit, the torque control amount adjuster (54) reduces the torque control amount such that overvoltage does not occur in the DC link (15). Thus, in the torque control amount adjuster (54), the reference value for the torque control amount is limited at a predetermined value (at such a value that the DC link voltage Vdc is not overvoltage). As a result, the foregoing resonance between the reactor (12) and the capacitor (16) is reduced, and an increase in DC link voltage (Vdc) as illustrated in FIG. 14 is reduced.

On the other hand, e.g., if the peak of the DC link voltage (Vdc) in the half power-supply cycle falls below a predetermined lower limit, the torque control amount adjuster (54) reduces the torque control amount. Thus, in the torque control amount adjuster (54), the reference value for the torque control amount is limited at a predetermined value. As a result, a substantial increase in duty ratio of the pulse signal of the PWM operator (48) can be reduced, and therefore degradation of the torque controllability can be avoided.

The torque control amount adjuster (54) of the present embodiment limits the torque control amount based on the DC link voltage (Vdc) detected by the DC link voltage detector (29). However, the torque control amount may be limited in a manner similar to the foregoing manner based on, e.g., the power-supply voltage (Vin) of the AC power supply (6).

Advantages of the Embodiment

According to the foregoing embodiment, in the torque control, the limiter (60) limits the output torque such that the output torque of the motor (5) does not reach a negative value (see FIG. 6). Thus, it can be ensured that regeneration of the motor (5) is reduced or prevented, and that the switching devices (Su, Sv, Sw, Sx, Sy, Sz) etc. are protected.

According to the foregoing embodiment, in the torque control, the maximum value for current of the motor (5) is held by the peak holder (55) so that the peak current (Ip) can be derived (see FIG. 8). Thus, a motor current value when the peak of the output torque and the peak of the DC link voltage (Vdc) are coincident with each other is easily derived as the peak current (Ip). When the peak current (Ip) exceeds the predetermined value, the variation range of the output torque is decreased, and therefore it can be ensured that the switching devices (Su, Sv, Sw, Sx, Sy, Sz) etc. are protected.

Further, under conditions where it is less likely that the peak (Pdc) of the DC link voltage (Vdc) and the peak (Pl) of the load torque are coincident with each other in the determination period (Td) of the peak holder (55), the operating frequency of the motor (5) is adjusted such that the beat cycle (Tb) and the determination period (Td) are equal to each other. Thus, referring to, e.g., FIG. 13, it can be ensured that the peaks (Pdc, Pl) are coincident with each other every determination period (Td) to derive the peak current (Ip).

According to the foregoing embodiment, if the peak of the DC link voltage (Vdc) in the half power-supply cycle exceeds the predetermined upper limit, the control amount of the output torque is limited at the predetermined value. This reduces or prevents, in advance, an increase in DC link voltage (Vdc) due to resonance between the reactor (12) and the capacitor (16). Moreover, if the peak of the DC link voltage (Vdc) in the half power-supply cycle falls below the predetermined lower limit, the control amount of the output torque is also limited at the predetermined value. This reduces or prevents degradation of the torque controllability due to an increase in duty ratio in the PWM operator (48).

<< Example not forming part of the invention>>

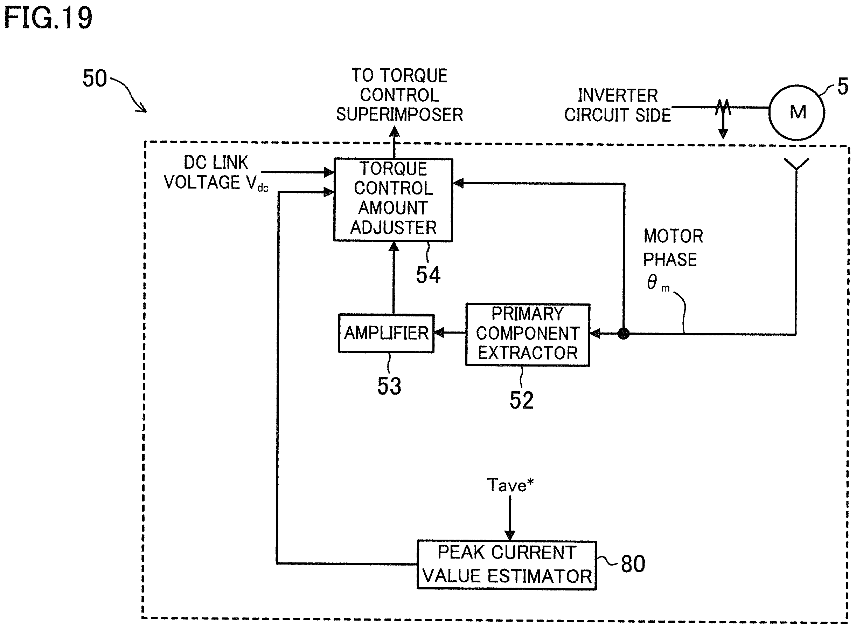

FIG. 19 is a block diagram illustrating a configuration of a torque controller (50) of an example of the present disclosure. The torque controller (50) of the present example includes a peak current value estimator (80), instead of including the peak holder (55) of the torque controller (50) of the first embodiment. An average torque reference value (Tave*) is input to the peak current value estimator (80). The torque controller (50) reduces the variation range of output torque of a motor (5) such that a peak current value estimated by the peak current value estimator (80) does not exceed a predetermined upper limit.

Suppose that an output value of the double-frequency component adder (44) of the first embodiment is represented by "Idq1*." A relationship among the average torque reference value (Tave*), a torque reference value (T*), and the output value (Idq1*) is shown by the following equations:

$$T^* = CT \times Tave^*$$

$$Idq1^* = CV \times T^* = CV \times CT \times Tave^*$$

where "CT" represents a variation component due to variation in load torque, and "CV" represents a variation component due to voltage pulsation. The magnitude of the output value (Idq1*) changes depending on the foregoing variation components. The output value (Idq1*) represents the magnitude of motor current. Thus, if a peak value for the output value (Idq1*) is obtained, the peak current value in an inverter circuit (20) upon a torque control can be estimated.

Suppose that the following equations are satisfied:

$$CT = 1 + kT \times \sin(\theta m)$$

where "kT" represents a torque control amount, and "$\theta m$" represents a motor phase (mechanical radian); and

$$CV = kV \times |\sin(\theta in)|$$

where "kV" represents a variation amount of the voltage pulsating component, and "$\theta in$" represents the phase of power-supply voltage. The output value (Idq1*) becomes the maximum when each of the phase ($\theta m$) and the power-supply phase ($\theta in$) is 90° or 270°. Such a maximum value is represented by the following equation:

$$Idq1^* = kV \times (1 + kT) \times Tave$$

Thus, if kV, kT, and Tave are obtained, a peak value for motor current varying in a beat pattern can be estimated.

The peak current value estimator (80) obtains the peak current value according to the foregoing relation equations. As described above, if the peak current value is obtained, the variation range of the output torque of the motor (5) is reduced such that the peak current value does not exceed a predetermined upper limit, and therefore advantages similar to those of the first embodiment can be realized.

<Other Embodiment>

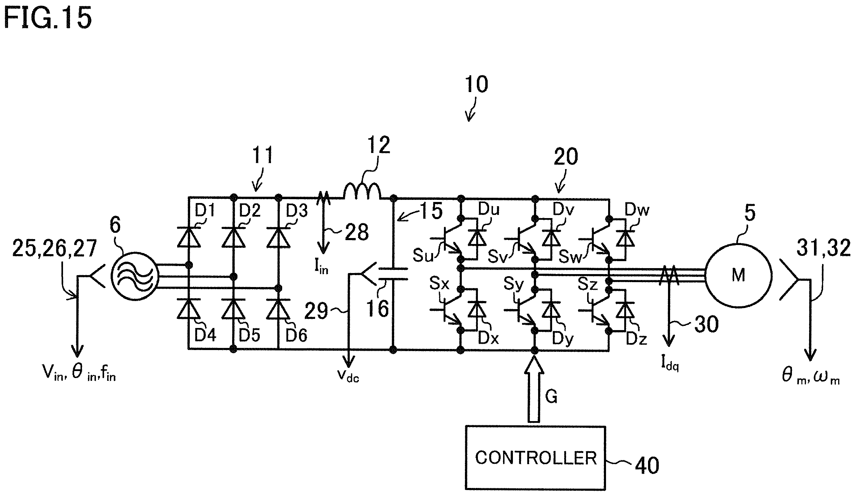

In the foregoing embodiments, the single-phase AC power supply (6) is used as a power supply, but the present disclosure is not limited to the foregoing. A three-phase AC power supply may be used as in the example (first variation) illustrated in FIG. 15. A converter circuit (11) illustrated in FIG. 15 is a diode bridge circuit in which six diodes (D1-D6) are connected together in a bridge configuration.

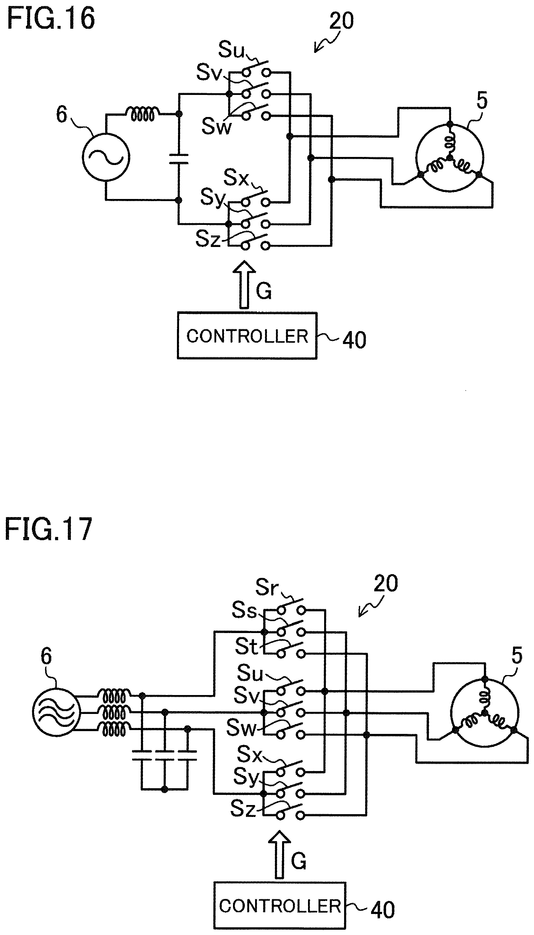

Moreover, in the foregoing embodiments, the present disclosure is intended for the power conversion apparatus including the converter circuit (11) and the inverter circuit (20), but not limited to such an apparatus. The present disclosure may be intended for a matrix converter (20) as in, e.g., the example (second variation) illustrated in FIG. 16 or the example (third variation) illustrated in FIG. 17. The matrix converter (20) serves as a converting section configured to convert power from the AC power supply (6) into AC power having a predetermined frequency. Transistors etc. may be used as switching devices (Sr, Ss, St, Su, Sv, Sw, Sx, Sy, Sz) of the matrix converter (20).

INDUSTRIAL APPLICABILITY

As described above, the present disclosure is useful for the power conversion apparatus configured to control the torque of the motor.

DESCRIPTION OF REFERENCE CHARACTERS

| 5 | Motor |
|---|---|
| 6 | AC Power Supply |
| 10 | Power Conversion Apparatus |
| 11 | Converter Circuit |
| 15 | DC Link |
| 16 | Capacitor |
| 20 | Inverter Circuit |
| 21 | Capacitor |
| 40 | Controller |
| 54 | Torque Control Amount Adjuster |
| 55 | Peak Holder |
| 60 | Limiter |
| 71 | Beat Cycle Calculator (Cycle Deriver) |
| 72 | Speed Reference Adjuster |

**Claims**

1. A power conversion apparatus, comprising:

   a converting section (20) including a plurality of switching devices (Sr, Ss, St, Su, Sv, Sw, Sx, Sy, Sz) and configured to convert, by switching of the switching devices (Sr, Ss, St, Su, Sv, Sw, Sx, Sy, Sz), power from an AC power supply (6) into AC power having a predetermined frequency to output the AC power to a motor (5); and **characterized by**
   a controller (40) configured to control the switching to allow output torque of the motor (5) to contain a power-supply pulsating component which is a pulsating component with an integer-fold of a frequency of output voltage of the AC power supply (6) and allow the output torque of the motor (5) to vary in association with variation in load torque of the motor (5), and configured to obtain a peak current value of a phase current flowing through the motor (5) when timing of a peak of the power-supply pulsating component and timing of a peak of a load torque pulsating component are coincident or substantially coincident with each other and to reduce a variation range of the output torque such that the peak current value does not exceed a predetermined upper limit; and wherein the controller (40) includes a peak holder (55) configured to hold the peak current value in a predetermined determination period; and
   a torque control amount adjuster (54) configured to reduce the variation range of the output torque of the motor (5) when the peak current value held by the peak holder (55) exceeds the predetermined upper limit.

2. The power conversion apparatus of claim 1, wherein the controller (40) further includes
   a speed reference adjuster (72) configured to adjust an operating frequency (fc) of the motor (5) such that the timing of the peak of the load torque pulsating component and the timing of the peak of the power-supply pulsating component are coincident or substantially coincident with each other during the determination period of the peak holder (55) .

3. The power conversion apparatus of claim 1, wherein
   the controller (40) further includes
   a cycle deriver (71) configured to derive, based on the frequency of the output voltage of the AC power supply (6) and the operating frequency of the motor (5), a cycle with timing at which a peak of the load torque of the motor (5) and a peak of the output voltage of the AC power supply (6) are coincident or substantially coincident with each other, and
   a speed reference adjuster (72) configured to adjust the operating frequency of the motor (5) such that the cycle derived by the cycle deriver (71) is equal to or shorter than the determination period of the peak holder (55).

4. The power conversion apparatus of claim 1, wherein
   the controller (40) is configured to estimate the peak current value and reduces the variation range of the output torque of the motor (5) such that the estimated peak current value does not exceed the predetermined upper limit.

**5.** The power conversion apparatus of claim 1, further comprising:

a converter circuit (11) configured to rectify the voltage from the AC power supply (6);
a DC link (15) including a capacitor (16) connected in parallel with an output of the converter circuit (11); and
an inverter circuit (20) configured to serve as the converting section and configured to convert voltage output from the DC link (15) into AC voltage to output the AC voltage to the motor (5),
wherein a capacitance value of the capacitor (16) is set at such a value that voltage input to the inverter circuit (20) has great pulsation to have a maximum value twice or greater than its minimum value.

**Patentansprüche**

**1.** Stromrichter, umfassend:

einen Umrichtungsabschnitt (20), der eine Vielzahl von Schaltvorrichtungen (Sr, Ss, St, Su, Sv, Sw, Sx, Sy, Sz) beinhaltet und konfiguriert ist, durch Umschalten der Schaltvorrichtungen (Sr, Ss, St, Su, Sv, Sw, Sx, Sy, Sz) Strom von einer Wechselstromversorgung (6) zu Wechselstrom mit einer vorbestimmten Frequenz zur Ausgabe des Wechselstroms an einen Motor (5) umzurichten; und **gekennzeichnet durch**
ein Steuergerät (40), das konfiguriert ist, das Umschalten zu steuern, um zu ermöglichen, dass ein Ausgangsdrehmoment des Motors (5) eine pulsierende Stromversorgungskomponente beinhaltet, die eine pulsierende Komponente mit einem ganzzahligen Vielfachen einer Frequenz einer Ausgangsspannung der Wechselstromversorgung (6) ist, und um dem Ausgangsdrehmoment des Motors (5) zu ermöglichen, in Verbindung mit einer Variation im Lastdrehmoment des Motors (5) zu variieren, und konfiguriert ist, einen Spitzenstromwert eines Phasenstroms zu erhalten, der durch den Motor (5) fließt, wenn Zeitpunkt einer Spitze der pulsierenden Stromversorgungskomponente und Zeitpunkt einer Spitze einer pulsierenden Lastdrehmomentkomponente miteinander zusammenfallen oder im Wesentlichen zusammenfallen, und einen Variationsbereich des Ausgangsdrehmoments zu verringern, sodass der Spitzenstromwert einen vorbestimmten oberen Grenzwert nicht übersteigt;
und wobei das Steuergerät (40)

eine Spitzenhalterung (55) beinhaltet, die konfiguriert ist, den Spitzenstromwert in einer vorbestimmten Bestimmungsperiode zu halten; und
eine Drehmomentsteuermengeneinstellvorrichtung (54), die konfiguriert ist, den Variationsbereich des Ausgangsdrehmoments des Motors (5) zu verringern, wenn der Spitzenstromwert, der von der Spitzenhalterung (55) gehalten wird, den vorbestimmten oberen Grenzwert übersteigt.

**2.** Stromrichter nach Anspruch 1, wobei das Steuergerät (40) weiter beinhaltet:
eine Geschwindigkeitsreferenzeinstelleinrichtung (72), die konfiguriert ist, eine Betriebsfrequenz (fc) des Motors (5) so einzustellen, dass der Zeitpunkt der Spitze der pulsierenden Lastdrehmomentkomponente und der Zeitpunkt der Spitze der pulsierenden Stromversorgungskomponente während der Bestimmungsperiode der Spitzenhalterung (55) miteinander zusammenfallen oder im Wesentlichen zusammenfallen.

**3.** Stromrichter nach Anspruch 1, wobei das Steuergerät (40) weiter beinhaltet:

einen Zyklusableiter (71), der konfiguriert ist, basierend auf der Frequenz der Ausgangsspannung der Wechselstromversorgung (6) und der Betriebsfrequenz des Motors (5) einen Zyklus mit einem Zeitpunkt, zu dem eine Spitze des Lastdrehmoments des Motors (5) und eine Spitze der Ausgangsspannung der Wechselstromversorgung (6) miteinander zusammenfallen oder im Wesentlichen zusammenfallen, abzuleiten, und
eine Geschwindigkeitsreferenzeinstelleinrichtung (72), die konfiguriert ist, die Betriebsfrequenz des Motors (5) so einzustellen, dass der Zyklus, der vom Zyklusableiter (71) abgeleitet wird, gleich oder kürzer ist als die Bestimmungsperiode der Spitzenhalterung (55).

**4.** Stromrichter nach Anspruch 1, wobei das Steuergerät (40) konfiguriert ist, den Spitzenstromwert zu schätzen, und den Variationsbereich des Ausgangsdrehmoments des Motors (5) verringert, sodass der geschätzte Spitzenstromwert den vorbestimmten oberen Grenzwert nicht übersteigt.

**5.** Stromrichter nach Anspruch 1, weiter umfassend:

eine Umrichterschaltung (11), die konfiguriert ist, die Spannung von der Wechselstromversorgung (6) gleichzurichten;

eine Gleichstromverbindung (15), die einen Kondensator (16) beinhaltet, der parallel mit einem Ausgang der Umrichterschaltung (11) verbunden ist; und

eine Wechselrichterschaltung (20), die konfiguriert ist, als der Umrichterabschnitt zu dienen, und konfiguriert ist, Spannungsausgang aus der Gleichstromverbindung (15) in Wechselspannung umzurichten, um die Wechselspannung an den Motor (5) auszugeben,

wobei ein Kapazitätswert des Kondensators (16) bei einem solchen Wert eingestellt ist, dass Spannung, die in die Wechselrichterschaltung (20) eingegeben wird, eine große Pulsierung aufweist, um einen Maximalwert zu haben, der das Zweifache oder mehr ihres Minimalwerts ist.

## Revendications

1. Convertisseur de puissance comprenant :

une section de conversion (20) incluant une pluralité de dispositifs de commutation (Sr, Ss, St, Su, Sv, Sw, Sx, Sy, Sz) et configurée pour convertir, par commutation des dispositifs de commutation (Sr, Ss, St, Su, Sv, Sw, Sx, Sy, Sz), la puissance issue d'une alimentation électrique CA (6) en une puissance CA présentant une fréquence prédéterminée pour délivrer la puissance CA à un moteur (5) ; et **caractérisé par**
un dispositif de commande (40) configuré pour commander la commutation afin de permettre au couple de sortie du moteur (5) de contenir une composante pulsatoire d'alimentation électrique qui est une composante pulsatoire avec un nombre entier de fois une fréquence de tension de sortie de l'alimentation électrique CA (6) et permettre au couple de sortie du moteur (5) de varier en association avec une variation du couple de charge du moteur (5), et configuré pour obtenir une valeur de courant de pic d'un courant de phase s'écoulant à travers le moteur (5) lorsque la synchronisation d'un pic de la composante pulsatoire d'alimentation électrique et la synchronisation d'un pic d'une composante pulsatoire de couple de charge coïncident ou coïncident sensiblement l'une avec l'autre et réduire une plage de variations du couple de sortie de sorte que la valeur de courant de pic ne dépasse pas une limite supérieure prédéterminée ; et dans lequel le dispositif de commande (40) inclut un mainteneur de pic (55) configuré pour maintenir la valeur de courant de pic dans une période de détermination prédéterminée ; et
un ajusteur de quantité de commande de couple (54) configuré pour réduire la plage de variations du couple de sortie du moteur (5) lorsque la valeur de courant de pic maintenue par le mainteneur de pic (55) dépasse la limite supérieure prédéterminée.

2. Convertisseur de puissance selon la revendication 1, dans lequel le dispositif de commande (40) inclut en outre un ajusteur de référence de vitesse (72) configuré pour ajuster une fréquence opératoire (fc) du moteur (5) de sorte que la synchronisation du pic de la composante pulsatoire du couple de charge et la synchronisation du pic de la composante pulsatoire d'alimentation électrique coïncident ou coïncident sensiblement l'une avec l'autre au cours de la période de détermination du mainteneur de pic (55).

3. Convertisseur de puissance selon la revendication 1, dans lequel le dispositif de commande (40) inclut en outre un dérivateur de cycle (71) configuré pour dériver, sur la base de la fréquence de la tension de sortie de l'alimentation électrique CA (6) et de la fréquence opératoire du moteur (5), un cycle avec une synchronisation à laquelle un pic du couple de charge du moteur (5) et un pic de la tension de sortie de l'alimentation électrique CA (6) coïncident ou coïncident sensiblement l'un avec l'autre, et
un ajusteur de référence de vitesse (72) configuré pour ajuster la fréquence opératoire du moteur (5) de sorte que le cycle dérivé par le dérivateur de cycle (71) soit égal ou inférieur à la période de détermination du maintien de pic (55).

4. Convertisseur de puissance selon la revendication 1, dans lequel
le dispositif de commande (40) est configuré pour estimer la valeur de courant de pic et réduit la plage de variations du couple de sortie du moteur (5) de sorte que la valeur de courant de pic estimée ne dépasse pas la limite supérieure prédéterminée.

5. Convertisseur de puissance selon la revendication 1, comprenant en outre :

un circuit convertisseur (11) configuré pour redresser la tension issue de l'alimentation électrique CA (6) ;
une liaison CC (15) incluant un condensateur (16) connecté en parallèle avec une sortie du circuit convertisseur (11) ; et

un circuit onduleur (20) configuré pour servir de section de conversion et configuré pour convertir la tension délivrée par la liaison CC (15) en tension CA afin de délivrer la tension CA au moteur (5),

dans lequel une valeur de capacité du condensateur (16) est réglée à une valeur telle que l'entrée de tension dans le circuit onduleur (20) présente une grande impulsion afin de présenter une valeur maximale deux fois supérieure ou plus à sa valeur minimale.

FIG.1

EP 2 667 501 B1

FIG.2

# FIG.3

EP 2 667 501 B1

# FIG.4

LEGEND:
- —·—· LOAD TORQUE OF MOTOR
- ········ DC LINK VOLTAGE
- ——— OUTPUT TORQUE OF MOTOR

TIME

ONE CYCLE ($T_{dc}$)
OF DC LINK VOLTAGE

CYCLE ($T_c$) OF ONE
ROTATION
OF COMPRESSOR

EP 2 667 501 B1

# FIG.5

**Legend:**
- ---·--- LOAD TORQUE OF MOTOR
- ·········· DC LINK VOLTAGE
- ——— OUTPUT TORQUE OF MOTOR

TIME

OUTPUT TORQUE REACHING NEGATIVE VALUE

# FIG.6

Legend:
-----·-- LOAD TORQUE OF MOTOR
---------- DC LINK VOLTAGE
———— OUTPUT TORQUE OF MOTOR

TIME

# FIG.7

Legend:
- ---- LOAD TORQUE OF MOTOR
- ········ DC LINK VOLTAGE
- —— OUTPUT TORQUE OF MOTOR

$P_l$   $P_{dc}$

TIME

# FIG.8

MOTOR CURRENT

PEAK CURRENT $I_p$

MAXIMUM VALUE FOR EACH DETERMINATION PERIOD ($T_d$)

MAXIMUM VALUE FOR EACH DETERMINATION PERIOD ($T_d$)

MAXIMUM VALUE FOR EACH DETERMINATION PERIOD ($T_d$)

MAXIMUM VALUE FOR EACH DETERMINATION PERIOD ($T_d$)

← DETERMINATION PERIOD($T_d$) → ← DETERMINATION PERIOD($T_d$) → ← DETERMINATION PERIOD($T_d$) → ← DETERMINATION PERIOD($T_d$) →

TIME

EP 2 667 501 B1

# FIG.9

Legend:
- —— LOAD TORQUE OF MOTOR
- ------ DC LINK VOLTAGE

## FIG.10

EP 2 667 501 B1

70

POWER-SUPPLY FREQUENCY $f_{in}$

OPERATING FREQUENCY $f_c$

71 BEAT CYCLE CALCULATOR

BEAT CYCLE $T_b$

72 SPEED REFERENCE ADJUSTER

SPEED REFERENCE $\omega^*$

DETERMINATION PERIOD $T_d$

ACTUAL ROTATIONAL SPEED $\omega$

ADJUSTED SPEED REFERENCE $\omega^{*\prime}$

34

41 SPEED CONTROLLER

FIG.11

## FIG.12

```
        ┌─────────────┐
        │    START    │
        └──────┬──────┘
               │
               ▼
┌──────────────────────────────┐
│ DERIVE FREQUENCY f_dc OF DC   │ ～ S1
│ LINK VOLTAGE                  │
└──────────────┬───────────────┘
               │
               ▼
┌──────────────────────────────┐
│ CALCULATE INTEGER n TO WHICH  │
│ FREQUENCY f_dc OF DC LINK     │ ～ S2
│ VOLTAGE AND INTEGER-FOLD      │
│ (n-FOLD) OF OPERATING         │
│ FREQUENCY fc MOST APPROXIMATE │
└──────────────┬───────────────┘
               │
               ▼
┌──────────────────────────────┐
│ CALCULATE BEAT FREQUENCY f_b  │ ～ S3
│ (f_b=f_dc−(f_c × n))          │
└──────────────┬───────────────┘
               │
               ▼
┌──────────────────────────────┐
│ CALCULATE BEAT CYCLE T_b      │ ～ S4
└──────────────┬───────────────┘
               │
               ▼
```

$$f_b = f_{dc} - (f_c \times n)$$

IS BEAT CYCLE $T_b >$ DETERMINATION PERIOD $T_d$?  — S5

NO

YES

ADJUST OPERATING FREQUENCY $f_c$ (SPEED REFERENCE $\omega*$) SUCH THAT BEAT CYCLE $T_b$ = DETERMINATION PERIOD $T_d$ IS SATISFIED  — S6

RETURN

## FIG.13

## FIG.14

# FIG.15

FIG.16

FIG.17

FIG.18

COMPRESSION TORQUE

0

ONE ROTATION ANGLE (TIME) OF MOTOR

# FIG.19

EP 2 667 501 B1

**EP 2 667 501 B1**

## REFERENCES CITED IN THE DESCRIPTION

**Patent documents cited in the description**

- JP 2005046000 A
- JP 2002051589 A
- JP 4192979 B
- JP 2004343993 A
- JP 2003164179 A